# EUROPEAN PATENT APPLICATION

(11) **EP 4 494 994 A1**
(43) Date of publication of application: **22.01.2025**
(21) Application number: 23186956.1
(22) Date of filing: 21.07.2023
(51) Int. Cl.: B63B 35/00, B63B 75/00, B63B 77/10, B63B 21/50

(54) **FLOATING STRUCTURE INTENDED FOR THE TRANSPORT AND INSTALLATION OF A FLOATING TENSIONED LEG PLATFORM**

(71) Applicant: Bluewater Energy Services B.V., 2132 LS Hoofddorp (NL)
(72) Inventor: van den Berg, Bastiaan Bernardus, 2201 XB Noordwijk (NL)
(74) Representative: De Vries & Metman

(57) **Abstract**

A floating structure (1) is provided which is intended for the transport and installation of a floating tensioned leg platform (TLP) (2) with a number of legs (3) radiating from a central point (4). The floating structure comprises controllable ballast tanks (6,6') for changing its buoyancy, and engagement means (9) for engaging the legs (3) of the TLP and maintaining the same at a required draft during transport and installation. Further, the floating structure comprises a number of floating structure parts intended to be positioned horizontally adjacent each of the legs (3) of the TLP, which floating structure parts are provided with the engagement means (9) for engaging counter engagement means provided on said legs (3) of the TLP (2) in such a way that, in an operative position of the floating structure in which said floating structure parts are positioned horizontally alongside the legs of the TLP, the engagement means are capable of loading the counter engagement means with a downward force opposite an upward buoyancy force of the TLP. The engagement means (9) further are arranged in such a manner that they are capable of engaging the counter engagement means in the described manner even when the legs (3) of the TLP at least partly are positioned at a level above sea level.

## Description

The invention relates to a floating structure intended for the transport and installation of a floating tensioned leg platform (TLP) with a number of legs radiating from a central point.

Part of the energy transition is the development of offshore wind farms, wherein the use of seabed fixed structures is the current state-of-art. Such fixed structures, however, are limited to sites with limited water depth. The demand for renewable energy is growing fast and therefore industrial, large-scale, solutions for floating offshore wind farms are being studied, which are able to utilize deeper sites as well. As a result, there is a strong interest in the use of TLP's supporting a wind turbine which are capable of being moored (directly or indirectly) to the seabed using mooring lines (or tendons) attached to its legs. A TLP based wind turbine foundation has high potential for the offshore floating wind market given its high power/weight ratio and small footprint.

In the installed, moored condition the pretension in the tendons, as a result of an excessive buoyancy of the TLP, provides stability to the whole TLP system (TLP inclusive wind turbine assembly). In this installed condition the water plane area of the TLP is preferably low in order to limit the effect of wave loadings, resulting in lower motions and accelerations.

However, during the phase of transport towards, and installation at a desired offshore wind farm site, a TLP system still lacks the restoring and stabilizing function of the tendons. At a free-floating draft the TLP system can be stable, but its seakeeping performance is limited, and its dynamic range of stability is insufficient for a safe transport. During the subsequent phase of installation (or de-installation when, for example, a TLP system is decommissioned) the TLP system is submerged and with the limited water plane area left, the TLP system will become unstable due to its high center of gravity (mainly caused by the high rising wind turbine on top of a wind turbine tower) and large overturning moments from wind induced drag loads.

At present, a TLP typically is transported to a site on the deck of a large crane vessel or by means of adding external (temporary) buoyancy at the TIFs of its legs, in order to be stable for tow-out by tug boats.

Further, at present a TLP typically is brought to its installation draft by putting temporary water ballast inside. This, however, requires a ballast system for each separate TLP which highly adds to the constructive complexity and thus cost of such a TLP, and further requires the provision of mitigation measures to prevent a corrosive environment inside the TLP.

In view of the above it is an object of the present invention to provide a floating structure intended for the transport and installation of a floating tensioned leg platform, using which such a transport and installation can be carried out in a safe and reliable manner without the need for (any or excessive) additional systems and/or constructive measures with respect to the TLP.

Thus, in accordance with the present invention such a floating structure comprises controllable ballast tanks for changing its buoyancy, and engagement means for engaging the legs of the TLP and maintaining the same at a required draft during transport and installation, wherein the floating structure comprises a number of floating structure parts intended to be positioned horizontally adjacent each of the legs of the TLP, which floating structure parts are provided with the engagement means for engaging counter engagement means provided on said legs of the TLP in such a way that, in an operative position of the floating structure in which said floating structure parts are positioned horizontally alongside the legs of the TLP, the engagement means are capable of loading the counter engagement means with a downward force opposite an upward buoyancy force of the TLP, and wherein said engagement means further are arranged in such a manner that they are capable of engaging the counter engagement means in the described manner even when the legs of the TLP at least partly are positioned at a level above sea level.

The floating structure in accordance with the present invention provides the opportunity to transport and install a TLP in a safe and reliable (stable) manner. When the TLP (or a TLP system, for example a TLP provided with a wind turbine) assumes a floating position with its legs at least partly positioned at a level above sea level, the floating structure with its respective floating structure parts (which are provided with the engagement means) can be arranged alongside the legs of the TLP such as to initiate an engagement between the engagement means on the floating structure and counter engagement means on the TLP when the floating structure is ballasted. Thus, there is no need to provide for a system in which the floating structure can be positioned over the TLP (for example requiring that the TLP is brought below sea level). In accordance with the present invention, the floating structure is capable of engaging the TLP in the desired manner while latter is in a normal floating position (that means a position resulting from its buoyancy and weight, without the use of the tendons).

During transport and installation, the floating structure, with its wide span and limited waterplane area, keeps the TLP in a stable position with excellent seakeeping characteristics (during transport for example with the legs fully submerged). The floating structure further allows the TLP to be lowered to a desired depth at the installation site (offshore wind farm) for allowing the hook-up of the mooring lines (tendons), after which the floating structure can be de-ballasted and the TLP due to its buoyancy will be moored in a stable manner by the tensioned mooring lines.

The counter engagement means on the legs of the TLP may comprise identifiable means, thus separate means provided on said legs, but it is conceivable too that a part of the legs being part of its normal construction (for example a top surface thereof) defines or plays the role of the counter engagement means (in such case, therefore, the construction of the TLP is not changed).

For security reasons the engagement means may be provided with members for improving an adhesion between the engagement means and the counter engagement means, or members of a soft material. Such members for improving an adhesion, for example, may comprise vacuum pads or magnets.

Alternatively, or additionally, the floating structure may be provided with locking members, such as locking pins, for locking the engagement means to the counter engagement means. Such locking members may cooperate with dedicated members or parts of the TLP.

For assuring an optimal cooperation between the engagement means and counter engagement means, the engagement means at the intended interfaces with the counter engagement means may have complimentary shapes with respect to the counter engagement means. For example, if the legs of the TLP are shaped as rounded tubes (an upper surface of which defines the counter engagement means), the engagement means may have a similar rounded shape.

For further helping in avoiding local stresses between the engagement means and counter engagement means, the lower side of the engagement means may be provided with a softer material than the remainder of the engagement means, such as wood, plastic or rubber.

In a preferred embodiment the engagement means comprise projecting cams arranged and embodied for engaging the counter engagement means.

When the cams have a stationary position relative to the floating structure, the complexity of the construction of the floating structure may be minimized.

However, in an alternative embodiment of the floating structure, the cams are movable with respect to the floating structure, such as linearly in a vertical direction or by a rotation in a horizontal or vertical direction. Preferably, then, the cams are movable in a motion-controlled or motion-dampened manner. Such a movement of the cams may be used to control the manner in which the cams and counter engagement means cooperate, especially (but not exclusively) during coupling the floating structure to or decoupling it from the TLP. A motion-controlled movement among others may be used to compensate for relative movements between the floating structure (for example resulting from waves) and the TLP (which, for example, may have a stationary position in its moored state), such as to prevent severe impacts therebetween. A movement of the cams also may be used to avoid collisions between the floating structure and the TLP in situations (especially during a disconnect therebetween) which will be discussed at a later stage.

In exceptional cases a vertical movement of the cams also may be used to (at least partly) lift the TLP out of the water, for example to reduce drag during transport.

As an alternative for the use of projecting cams, the engagement means also may comprise recesses in the floating structure parts (which may receive the counter engagement means of the TLP).

In a very special embodiment, the floating structure according to the present invention is provided with a release mechanism comprising releasable locking members for in a controlled manner releasing the floating structure from the TLP.

For example, the releasable locking members may comprise ropes, cables or piston-cylinder assemblies of which a first end in a releasable manner is attached to one of the floating structure and TLP and of which a second end is attached to the other of the floating structure and TLP and of which the distance between the first and second ends may be controlled.

A controlled release of the floating structure from the TLP can be used to avoid hazardous impacts therebetween. Without such releasable locking members, the floating structure after a release from the TLP (for example when latter has been installed and is kept at the desired position and depth by the tendons) and during de-ballasting would start to move away (upwards) from the TLP gradually by a gradual increase of its buoyancy. At the initial stage of such a movement, when the distance between the stationary TLP and upwardly moving floating structure is still rather moderate and the buoyancy of the floating structure is still rather limited, uncontrolled movements of the floating structure (for example due to waves or other external factors) could result in an impact between the TLP and floating structure and a large risk on damage or dangerous situations.

However, when using the controlled release mechanism according to the invention, the floating structure already may be (partly) de-ballasted while the releasable locking members keep the TLP connected to (in engagement with) the floating structure. Only when the floating structure has been de-ballasted sufficiently (resulting in a large buoyancy), the locking members may be detached or controlled in a manner to increase the distance between the first and second ends thereof, which results in a movement of the floating structure upwards and away of the TLP. Because now, when this movement starts, the floating structure already has a large buoyancy, it is very unlikely (or even impossible) that the floating structure may collide with the TLP due to waves or other external influences.

The increase in distance between the ends of the locking members may comprise winding off a cable or rope or extending a piston-cylinder assembly.

When the distance between the floating structure and TLP has increased sufficiently, the locking members may be disconnected fully from at least one of the TLP or floating structure (for example from the TLP, such that the locking members remain connected to the floating structure to be used again with another TLP).

Other measures for avoiding a collision between the TLP and floating structure may be provided. For example, the floating structure may be provided with means for ensuring a quick release between the floating structure and the TLP, such as one or more dump valves for quickly discharging ballast water. Such a quick discharge of ballast water results in a sudden and quick increase of the buoyancy of the floating structure, which also can help in assuring that the floating structure only will move away from (and not towards) the TLP.

Constructively, the floating structure according to the present invention may comprise a number of spaced-apart column-shaped ballast tanks which are connected by connecting beams, wherein the engagement means are provided on said ballast tanks.

This yields a floating structure which is very stable, both during transport and installation of the TLP but also when floating alone. The stability mainly results from the distance between the ballast tanks which individually may have a rather limited water plane area, and the distance and water plane area can be designed to gain positive seakeeping characteristics.

In one embodiment, the bottom of each ballast tank is provided with a foot having a larger horizontal cross section than the remainder of the ballast tank. This allows the floating structure to rest in a stable manner on a seabed (for example in a shallow harbor) when ballasted sufficiently, also when connected to a TLP (such that the TLP may be assembled, for example with a wind turbine, while being kept in a very stable position). Also, the use of the feet allows the floating structure to operate in shallow water.

The foot may or may not have a ballast chamber. Further such feet also may provide additional dynamic damping to the floating structure.

In a specific embodiment, in which the floating structure is intended for use with a three-legged TLP, it comprises three ballast tanks arranged in a triangular configuration (as seen from above), with a first ballast tank at a top of the triangular configuration and two ballast tanks at the adjacent corners of the triangular configuration and each connected to the first ballast tank by a connecting beam.

The open part of the triangular configuration allows the floating structure to sail-in around the TLP's central point (for example the tower of a wind turbine) and to float with its ballast tanks towards and into contact with the three legs of the TLP. Each leg (for example with a tip end) then contacts the floating structure (for example at a sidewall of the column-shaped ballast tanks) while the engagement means (for example cams) on the ballast tanks are positioned over the counter engagement means (for example upper surface) of the legs.

It is conceivable that the ballast tanks and connecting beams are disconnectable from each other, allowing an efficient transport and storage.

The floating structure in accordance with the present invention may comprise other features and may provide other advantages, which shortly and in a non-limiting manner will be mentioned below.

The floating structure basically adds a temporary tool to a TLP in order to provide latter the characteristics of a semi-submersible with respect to good seakeeping, stability, and increased operability. The floating structure with its engagement means can sail over the TLP's legs for a subsequent push down of the TLP.

The widely spaced column-shaped ballast tanks, if provided, provide significant stability to the entire system, similar to a semi-submersible. This means that the water plane area is minimized by concentrating the buoyancy in the ballast tanks. A minimized water plane area helps in reduction of wave response. Further, such column-shaped ballast tanks can provide superior space for ballast water and the related pumps/equipment.

The use of the engagement means, such as cams, allows for connecting with the TLP, for example the TIFs of its legs, based on positive buoyancy of the TLP and by ballasting and lowering the floating structure. Herein, the ballasting system of the floating structure is used to bring/lower the entire system (floating structure and TLP) to installation depth, after which disconnecting the floating structure from the TLP basically is done by de-ballasting the floating structure. The floating structure can safely free itself from the TLP by either translation, rotation and/or vertical clearance.

The floating structure may further be used for transport or storage of materials and equipment. For example, tendons and installation equipment can be fitted to the floating structure if a tendon installation from the floating structure is required. But the floating structure also may provide a deck accommodating other installation aids such as power-packs, accommodation, small components, small cranes, walk-ways, or (drums with) tendons. Additional equipment can be outfitted to the floating structure for a controlled disconnect after hook-on, as discussed previously.

The design of the floating structure may be scalable for larger TLP's, such as by replacing connecting beams with other sized beams, updating ballast volume and pump-capacity, change column diameter and height.

Finally, although generally the transit and station keeping of the floating structure generally is done by means of tug boats (in line with normal offshore installation practices and for keeping the cost low), it also is possible that the floating structure is fitted with DP (Dynamic Positioning) means.

Hereinafter the invention will be elucidated while referring to the following drawings, in which:
Figure 1 is a perspective view of an embodiment of the floating structure connected to a TLP;
Figure 2 likewise is a perspective view of an embodiment of the floating structure connected to a TLP that is provided with a wind turbine;
Figure 3 schematically shows the use of auxiliary members between a floating structure and TLP;
Figure 4 illustrates the use of locking members;
Figure 5 shows three different embodiments of cams;
Figure 6 schematically illustrates a vertically movable cam;
Figure 7 schematically shows three different embodiments with rotatable cams;
Figure 8 shows an embodiment with releasable locking members, and
Figure 9 illustrates the use of dump valves.

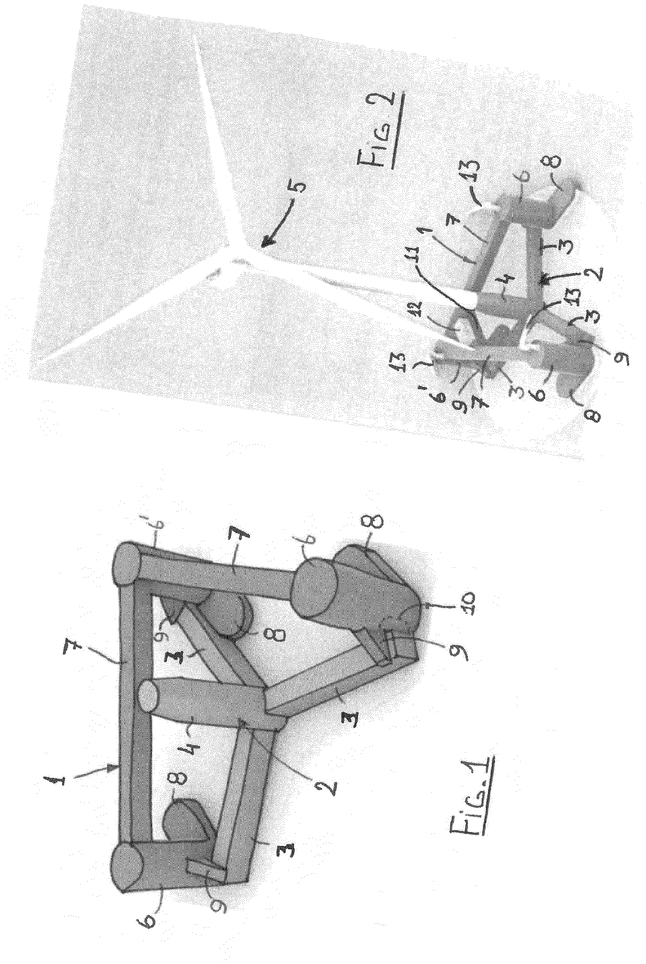

In figures 1 and 2 two different views of an embodiment of a floating structure 1 (in the following TIF - Transport and Installation Frame- mentioned) according to the invention are illustrated, which TIF is intended for the transport and installation of a floating tensioned leg platform (TLP) 2 with a number of legs 3 radiating from a central point, such as a tower (or central column) 4 of a wind turbine 5 (the latter only being shown in figure 2).

The TIF 1 comprises a number of (here three) spaced-apart controllable column-shaped ballast tanks 6,6' for changing its buoyancy. The ballast tanks 6,6' are arranged in a triangular configuration (as seen from above), with a first ballast tank 6' at a top of the triangular configuration and two ballast tanks 6 at the adjacent corners of the triangular configuration. The ballast tanks 6 are each connected only to the first ballast tank 6' by a respective horizontal connecting beam 7 and are not connected to each other. This leaves an open space between said ballast tanks 6 and between the connecting beams 7 for the reception of the TLP 2.

The bottom of each ballast tank 6,6' is provided with a foot 8 having a larger horizontal cross section than the remainder of the ballast tank 6,6'.

In the illustrated embodiment the TIF 1 is intended for use with a three-legged TLP 2, and thus comprises three ballast tanks 6,6'. For use with a TLP having a different number of legs 3, the TIF may comprise a different, corresponding number of ballast tanks. The number of connecting beams 7 may vary as well.

Each ballast tank 6,6' is provided with an engagement means, in the illustrated embodiment embodied as a cam 9 for engaging an upper surface at a TIF region of a corresponding one of the legs 3 of the TLP 2 (which upper surface than acts as a counter engagement means).

In other embodiments not illustrated, the cams may engage other parts of the legs 3 of the TLP 2. As an alternative for a cam 9, a recess (illustrated schematically in broken lines at 10 in figure 1) may be provided which receives (part of) a leg 3.

The cams 9 will be used for maintaining the TLP 2 at a required draft during transport and installation procedures, as will be elucidated at a later stage.

As visible, the TIF 1 thus comprises parts (specifically the ballast tanks 6,6') intended to be positioned horizontally adjacent each of the legs 3 of the TLP 2, and those parts are provided with the cams 9 for engaging the legs 3 of the TLP 2 in such a way that, in an operative position of the TIF 1 in which said parts are positioned horizontally alongside the legs 3 of the TLP 2, the cams 9 are capable of loading the legs 3 with a downward force opposite an upward buoyancy force of the TLP 2.

The cams 9 further are arranged in such a manner that they are capable of engaging the legs 3 in the described manner even when the legs 3 of the TLP 2 at least partly are positioned at a level above sea level.

Figure 2 further shows that the TIF 1 may comprise a structure 11 for carrying objects 12, like materials or equipment. The ballast tanks 6,6' likewise may support additional equipment, for example cranes 13 (only illustrated in figure 2), or other objects.

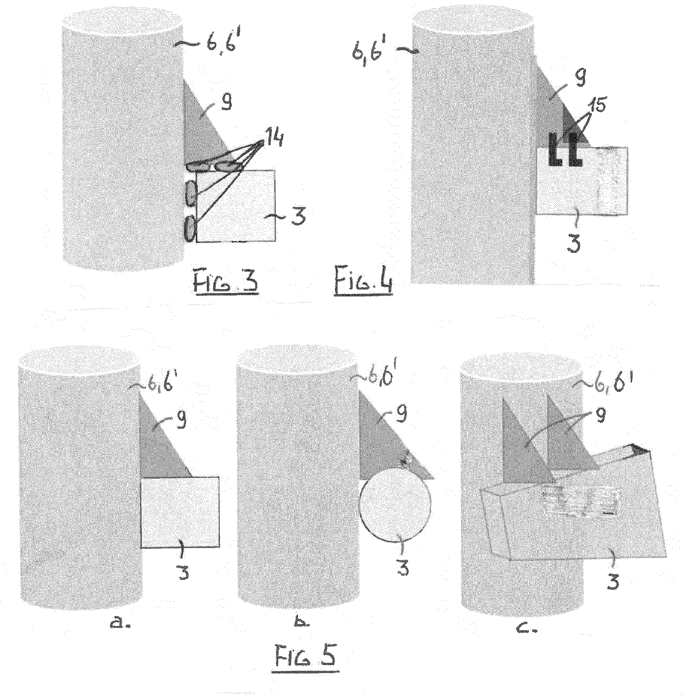

As shown in figure 3, the cams 9 may be provided with members 14, for example for improving an adhesion between the cams 9 and the legs 3, in which case such members 14, for example, could comprise vacuum pads or magnets. Alternatively, said members 14 also could be made of a soft material (e.g. wood, plastic or rubber) for avoiding high local stresses.

Referring to figure 4, there also can be provided locking members 15, such as locking pins, for locking the engagement means (cams 9) to the counter engagement means (legs 3).

As illustrated schematically in three different embodiments in figure 5, the engagement means (cams 9) at the intended interfaces with the counter engagement means (legs 3) preferably will have complimentary shapes with respect to the counter engagement means for assuring an optimal transfer of forces therebetween. In figure 5a the upper surface of the leg 3 is flat, as is the lower edge of the cam 9. In figure 5b both are rounded in a similar manner and in figure 5c there are two spaced cams 9 of which the lower edges are located at different levels for matching an inclined upper surface of the leg 3.

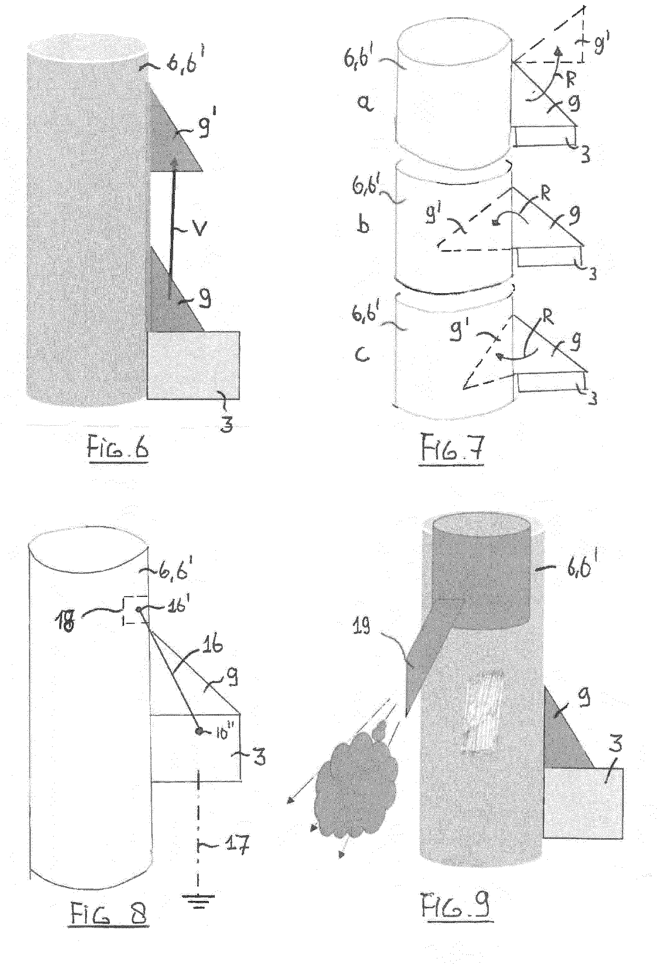

In the embodiments illustrated previously, the cams 9 have a stationary position relative to the TIF 1 (here relative to the ballast tanks 6,6'). As an alternative, however, the cams 9 may be movable with respect to the TIF, such as linearly in a vertical direction V (figure 6) to an elevated position 9' out of engagement with leg 3, or by a rotation R in a vertical direction upwards (figure 7a) or inwards, for example into a reception opening (not illustrated) in the ballast tank 6,6' (figure 7b), or by a rotation R in a horizontal direction (figure 7c), each to a new position 9' out of engagement with the leg 3.

The capability of the cam 9 to move, among others allows to quickly establish sufficient clearing between the TIF 1 and TLP 2, especially during the process of disconnecting.

The cams 9 may be movable in a motion-controlled or motion-dampened manner (especially in a vertical direction), for example for compensating relative movements between the TLP 2 and TIF 1.

The TLP 2 generally will be manufactured in a shipyard and then will be transported to a marshalling yard where it can be off-loaded and parked in or in the vicinity of the port, in shallow water. The TIF 1 with its cams 9 can float over a parked TLP and can move it to a quay-side or prepared seabed and bring it to the seafloor or an artificial support structure by means of ballasting.

The unique design of the feet 8 (enlarged horizontal parts) allows the TIF to operate in shallow water, which allows for optimal usage of port-area or near-port space.

The open space of the triangular or V-shape of the TIF 1 as defined by the ballast tanks 6,6' and the connecting beams 7, allows it to sail around the TLP's centre column (for example tower 4) and float alongside the legs 3 and over the legs 3 with the cams 9. Manoeuvring the TIF 1 can occur by own propulsion means or by using tugboats.

The tip-end of each leg 3 will contact a corresponding sidewall of a column-shaped ballast tank 6,6', thus assuring a correct relative position between the TIF 1 and TLP 2.

Next, the TIF 1 is ballasted by flooding the ballast tanks 6,6' and it will move down until the cams 9 engage the legs 3 of the TLP 2. By controlling the ballast (and thus the negative buoyancy) of the TIF 1, the force with which the cams 9 downwardly load the legs 3 of the TLP 2 (opposite to the buoyancy of the TLP) and thus the draft of the entire TIF/TLP assembly may be controlled. Additional connection means, such as cables or mechanical connections, between the TIF 1 and TLP 2 may be used for additional security during towage/transport.

During transport, the TLP 2 and TIF 1 are connected and as such are to be seen as a single floating unit. The main function of the TIF 1 is to provide additional stability to the TLP 2, optionally equipped with wind turbine 5, for optimal seakeeping properties.

Generally, during such a transport, the TLP legs 3 will be fully submerged. The TLP's centre column (tower 4) and the three column-shaped ballast tanks 6,6' of the TIF 1 generally will be partly submerged and all ballast tanks 6,6' will provide a water plane area. The water plane area and the distribution thereof are designed such, that the natural periods for heave and pitch/roll are outside the governing wind and swell wave periods. As a result, the complete assembly (TIF 1, TLP 2, optionally wind turbine 5) has enough stability.

As mentioned before, propulsion for the TIF 1 can be provided externally, by means of tugboats, or by TIF mounted propellers. Multiple tugboats may be required both for speed and heading control.

The aim of the propulsion is to transport the entire assembly to the installation site in medium sea-states. Important design criteria are the maximum acceleration experienced by the wind turbine 5, and towing speed. The latter is related to the total drag. The drag resistance is reduced by means of rounded vertical column-shaped ballast tanks 6,6' and smooth shapes of the feet 8. The seakeeping properties will also be designed such that it can 'survive' any unforeseen harsher weather conditions and stay within the wind turbine motions limits, thus providing the TIF 1 with robustness in the operational scheme.

A possible configuration of the TIF 1 might contain a lifting mechanism (see cranes 13 in figure 2) that can transport the TLP 2 when (fully or partly) lifted out of water. This will reduce the drag force of the total system.

Ballast water in the ballast tanks 6,6' will be used to increase the draft of the total system when arriving at an installation site. Ballasting can be done upon arrival at site or could, under certain weather conditions, also be started during transport. The TIF 1 will be ballasted slightly deeper than the installation depth target of the TLP 2. This will allow the installation and fitting of the tendons; the tendon length is site and location specific. An extension or installation wire will be connected to an upper part of the tendon to guide the tendon upper part into a tendon connecter at the leg TIF of the TLP 2.

The tendon will either be pre-installed (pre-laid mooring system) or installed starting from the TIF 1. In that case, the tendon material and required installation equipment will be installed on deck of the TIF (see structure 11 in figure 2). The significant 'deck' space is an important feature of this TIF 1, allowing for safe walkways, equipment, and storage of equipment 12 and small components.

The TIF 1 provides significant stability to the whole system, which is essential during the hook-on of the tendons. This will result in minimum relative motions between a pre-installed tendon and the tendon connector at the leg 3 of the TLP 2. Logically, this will improve the weather window of the hook-on and the safety during this operation. In case the tendon will be installed starting from the TIF 1, the relative motion between the lower part of the tendon and an anchor point is minimized.

After the hook-on, the TIF 1 will start de-ballasting and slowly moves upwards. As a result, the tendons get tensioned. This will continue until the tendons are loaded to the targeted pre-tension level. At that point, the TIF 1 with its cams 9 will start to separate from the legs 3 of the TLP 2. The TIF 1 will continue to de-ballast at a carefully designed pace, such that the separation between the TIF 1 and TLP 2 stays safe. Or more precise, the clearance generally will increase fast enough such that the probability of retouching will be low.

During the first stage of separation between the TIF 1 and the TLP 2 the buoyancy of the TIF 1 is still moderate and there is a risk that the TIF 1 due to external influences (for example waves) will collide with the TLP 2 (which then is kept stationary by its tendons).

Thus, from a point of reliability, robustness, and safety, additional equipment may be added to the TIF 1 for in a controlled manner releasing the TLP 2 from the TIF 1. This can be some kind of a release mechanism with releasable locking members. Such a mechanism could also be used for generating horizontal clearance. The application of soft contact materials on the TIF 1 could be opted as well.

Figure 8 schematically illustrates an embodiment of such a release mechanism, in which releasable locking members 16 (for example ropes, cables or piston-cylinder assemblies) are provided of which a first end 16' in a releasable manner is attached to the (ballast tank 6,6' of the) TIF 1 and of which a second end 16" is attached to the (leg 3 of the) TLP 2 (which is moored by tendons 17). The locking members 16 initially keep the TIF 1 firmly into contact with the TLP 2 until the TIF 1 is sufficiently de-ballasted to obtain a large surplus of buoyancy. Then the locking members 16 may be released (for example at the second end 16") and the TIF 1 will move upwards at a higher pace without the risk on a collision with the TLP 2. It is also possible that the locking members 16 for a while stay connected to both the TIF 1 and TLP and that the length thereof (between the ends 16' and 16") is increased, for example using a winch (indicated schematically at 18 in figure 8), such that the TIF 1 will steadily move upwards and away from the TLP 2. Part 18, alternatively, may be a piston housing of a piston-cylinder assembly, in which case 16 represents a piston rod.

When the clearance between the TIF 1 and TLP 2 in both vertical and horizontal direction is sufficient, the TIF 1 can be moved away from the TLP 2. Also, the cam 9 may be moved away to a safe position. If the TIF 1 is outside the installation site, the installation of the TLP 2 is completed.

As a further aid in obtaining a safe and quick release of the TIF 1 from the TLP 2, additional means may be provided, such as one or more dump valves 19 for quickly discharging ballast water from the ballast tanks 6,6' of the TIF 1.

After installation of the TLP 2, the TIF 1 can be towed back to port. Prior to this voyage, the TIF 1 can optimize its draft (by ballasting or de-ballasting) for the expected sea state (waves) and wind conditions. As a result, the TIF 1 has sufficient stability to be towed back in medium and medium-harsh conditions.

At arrival at the final destination, the draft can be reduced, allowing the TIF 1 to be moved to shallow areas for further operations or storage. The specialised feet 8 will again allow for shallow drafts and allow the TIF 1 to be placed on the (flattened) seabed.

The invention is not limited to the embodiments described which may be varied widely within the scope of the invention as defined by the appending claims.

## Claims

1. Floating structure (1) intended for the transport and installation of a floating tensioned leg platform (TLP) (2) with a number of legs (3) radiating from a central point (4), which floating structure comprises controllable ballast tanks (6,6') for changing its buoyancy, and engagement means (9) for engaging the legs (3) of the TLP and maintaining the same at a required draft during transport and installation, wherein the floating structure comprises a number of floating structure parts intended to be positioned horizontally adjacent each of the legs (3) of the TLP, which floating structure parts are provided with the engagement means (9) for engaging counter engagement means provided on said legs (3) of the TLP (2) in such a way that, in an operative position of the floating structure in which said floating structure parts are positioned horizontally alongside the legs of the TLP, the engagement means are capable of loading the counter engagement means with a downward force opposite an upward buoyancy force of the TLP, and wherein said engagement means (9) further are arranged in such a manner that they are capable of engaging the counter engagement means in the described manner even when the legs (3) of the TLP at least partly are positioned at a level above sea level.

2. Floating structure according to claims 1, wherein the engagement means (9) are provided with members (14) for improving an adhesion between the engagement means and the counter engagement means, or members of a soft material.

3. Floating structure according to claim 2, wherein said members (14) comprise vacuum pads or magnets.

4. Floating structure according to any of the previous claims, and provided with locking members (15), such as locking pins, for locking the engagement means (9) to the counter engagement means.

5. Floating structure according to any of the previous claims, wherein the engagement means (9) at the intended interfaces with the counter engagement means have complimentary shapes with respect to the counter engagement means.

6. Floating structure according to any of the previous claims, wherein the engagement means (9) are arranged for engaging a top surface of the legs (3) of the TLP (2) .

7. Floating structure according to any of the previous claims, wherein the engagement means (9) comprise projecting cams arranged and embodied for engaging the counter engagement means.

8. Floating structure according to claim 7, wherein the cams (9) have a stationary position relative to the floating structure (1).

9. Floating structure according to claim 7, wherein the cams (9) are movable with respect to the floating structure (1), such as linearly in a vertical direction (V) or by a rotation (R) in a horizontal or vertical direction.

10. Floating structure according to claim 9, wherein the cams (9) are movable in a motion-controlled or motion-dampened manner.

11. Floating structure according to any of the claims 1-6, wherein the engagement means (9) comprise recesses (10) in the floating structure parts.

12. Floating structure according to any of the previous claims, provided with a release mechanism comprising releasable locking members (16) for in a controlled manner releasing the floating structure (1) from the TLP (2) .

13. Floating structure according to claim 12, wherein the releasable locking members (16) comprise ropes, cables or piston-cylinder assemblies of which a first end (16') in a releasable manner is attached to one of the floating structure and TLP and of which a second end (16") is attached to the other of the floating structure and TLP and of which the distance between the first and second ends may be controlled.

14. Floating structure according to any of the previous claims, provided with means for ensuring a quick release between the floating structure (1) and the TLP (2), such as one or more dump valves (19) for quickly discharging ballast water.

15. Floating structure according to any of the previous claims, wherein the floating structure comprises a number of spaced-apart column-shaped ballast tanks (6,6') which are connected by connecting beams (7) and wherein the engagement means (9) are provided on said ballast tanks.

16. Floating structure according to claim 15, wherein the bottom of each ballast tank (6,6') is provided with a foot (8) having a larger horizontal cross section than the remainder of the ballast tank.

17. Floating structure (1) according to claim 15 or 16 and intended for use with a three-legged TLP (2), comprising three ballast tanks (6,6') arranged in a triangular configuration, with a first ballast tank (6') at a top of the triangular configuration and two ballast tanks (6) at the adjacent corners of the triangular configuration and each connected to the first ballast tank by a connecting beam (7).

18. Floating structure according to any of the claims 15-17, wherein the ballast tanks (6,6') and connecting beams (7) are disconnectable from each other.
